# EUROPEAN PATENT APPLICATION

(11) **EP 3 346 574 A1**
(43) Date of publication of application: **11.07.2018**
(21) Application number: 17177634.7
(22) Date of filing: 23.06.2017
(51) Int. Cl.: H02J 7/00

(54) **HAND-HELD ELECTRONIC APPARATUS, CHARGING SYSTEM, CONNECTOR AND CHARGING MANAGEMENT METHOD THEREOF**

(30) Priority: 10.01.2017 US 201715402250
(71) Applicant: HTC Corporation, Taoyuan City 330 (TW)
(72) Inventor: HE, Kun-Da, Taoyuan City 330 (TW); CHANG, Chih-Hsiung, Taoyuan City 330 (TW); LIN, Shih-Ping, Taoyuan City 330 (TW); WU, Chuan-Li, Taoyuan City 330 (TW); CHANG, Chia-Ming, Taoyuan City 330 (TW); YEN, Ming-Tse, Taoyuan City 330 (TW); CHANG, Pin-Hsuan, Taoyuan City 330 (TW); LIN, Chun-Wei, Taoyuan City 330 (TW)
(74) Representative: Carstens, Dirk Wilhelm

(57) **Abstract**

A hand-held electronic apparatus, a charging system, a connector and a charging management method thereof are provided. The charging management method includes: detecting a detection temperature on a charging port of the hand-held electronic apparatus, wherein the charging port is coupled to a power adapter; starting an alert mode when the detection temperature exceeds a threshold; measuring variation of the detection temperature according to a preset cycle in the alert mode; setting an over-temperature flag according to the variation of the detection temperature in the alert mode; and making the power adapter stop providing a charging voltage according to the over-temperature flag.

## Description

### BACKGROUND OF THE INVENTION

### 1. Field of the Invention

The present invention relates to a hand-held electronic apparatus, a charging system, a connector and a charging management method thereof, and particularly, to a hand-held electronic apparatus, a charging system and a charging management method thereof capable of preventing that overheating of the apparatus brings forth danger.

### 2. Description of Related Art

In current hand-held mobile apparatuses, due to increase of frequency of use and improvement of battery capacity, the design for rapid charging is increasingly popular, and an increasingly greater charging current is required. In this situation, security of a charger, a wire rod, and a connector to which the hand-held mobile apparatus is applied becomes particularly important. The current hand-held mobile apparatus has lots of security concerns, for example, water or moisture enters a charging connector of the hand-held mobile apparatus, because water volatilization will make impurities in the water precipitated on the connector and lead to increase of the impedance on the charging connector; based on the common use of the hand-held mobile apparatus in public places, there is a great probability to encounter foreign matters or dust invades the charging connector.

In the above situation, after the hand-held mobile apparatus has been used for a long time, great heat may be generated during charging due to degradation of the connector, and even security concerns may be generated due to a phenomenon of burnout. Therefore, how to ensure security of the hand-held mobile apparatus in use is an important issue of those skilled in the art.

### SUMMARY OF THE INVENTION

The present invention provides a hand-held electronic apparatus, a charging system, a connector and a charging management method thereof, which can avoid that the port is short-circuited to lead to an over-temperature state.

The charging management method of the present invention is suitable for a hand-held electronic apparatus, including: detecting a detection temperature on a charging port of the hand-held electronic apparatus, wherein the charging port is coupled to a power adapter; starting an alert mode when the detection temperature exceeds a threshold; measuring variation of the detection temperature according to a preset cycle in the alert mode; setting an over-temperature flag according to the variation of the detection temperature in the alert mode; and making the power adapter stop providing a charging voltage according to the over-temperature flag.

The charging system of the present invention includes an apparatus end and a power adapter. The apparatus end has a charging port, a temperature detector, and a first controller, and the temperature detector is configured on the charging port and transmits a detection temperature to the first controller. The power adapter is coupled to the apparatus end, and provides a charging voltage to the charging port, wherein the first controller starts an alert mode when the detection temperature exceeds a threshold, measures variation of the detection temperature according to a preset cycle in the alert mode, and sets an over-temperature flag according to the variation of the detection temperature. The first controller transmits over-temperature information to the power adapter according to the over-temperature flag, and makes the power adapter stop providing the charging voltage to the charging port.

The connector of the present invention receives a charging voltage provided by a power adapter, and is connected to a host end through a charging port. The connector includes a temperature detector, a controller and a power switch. The temperature detector detects a detection temperature. The controller is coupled to the temperature detector, and receives the detection temperature. The power switch is coupled to the first controller, the power adapter, and the charging port, wherein the controller starts an alert mode when the detection temperature exceeds a threshold, and measures variation of the detection temperature in the alert mode according to a preset cycle, and sets an over-temperature flag according to the variation of the detection temperature. The controller transmits over-temperature information to the power switch according to the over-temperature flag, and makes the power switch cut off to stop providing the charging voltage to the charging port.

The hand-held electronic apparatus of the present invention is connected to a power adapter for charging. The hand-held electronic apparatus includes a charging port, a temperature detector, and a controller. The temperature detector disposed adjacently to the charging port, and detects a detection temperature on the charging port. The controller is coupled to the charging port and the temperature detector, receives the detection temperature, starts an alert mode when the detection temperature exceeds a threshold, and measures variation of the detection temperature in the alert mode according to a preset cycle, and sets an over-temperature flag according to the variation of the detection temperature. The controller transmits over-temperature information to the power adapter according to the over-temperature flag, and makes the power adapter stop providing a charging voltage to the charging port.

Based on the above, the present invention provides a hand-held electronic apparatus, a connector, and a charging system, judges whether micro-short circuiting occurs in a charging port of the hand-held electronic apparatus according to a variation rate of a detection temperature in an alert mode, and stops a charging action in an over-temperature condition, to avoid unanticipated danger.

To make the above features and advantages of the present invention more comprehensible, detailed description is made below with specific embodiments and in conjunction with the accompanying drawings.

### BRIEF DESCRIPTION OF THE DRAWINGS

Fig. 1 is a flow chart of a charging management method according to an embodiment of the present invention.
Fig. 2 is a flow chart of implementation steps of the charging management method according to the embodiment of the present invention.
Fig. 3A is a schematic diagram of a charging system according to an embodiment of the present invention.
Fig. 3B is a schematic diagram of an implementation manner of an apparatus end according to an embodiment of the present invention.
Fig. 4 is a flow chart of implementation steps of a charging management method according to another embodiment of the present invention.
Fig. 5A and Fig. 5B are schematic diagrams of implementation manners of a hand-held electronic apparatus and a charging port thereof.

### DESCRIPTION OF THE EMBODIMENTS

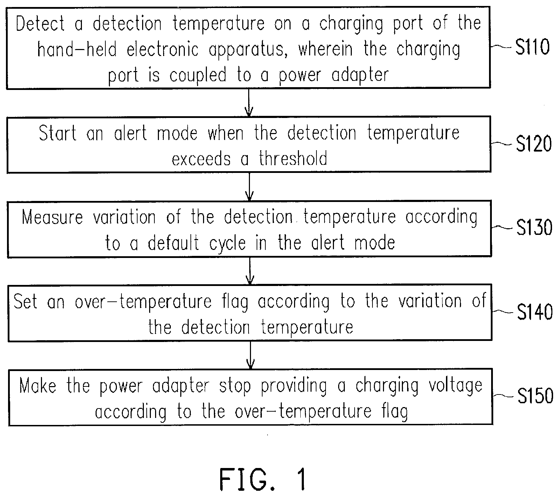

Referring to Fig. 1, Fig. 1 is a flow chart of a charging management method according to an embodiment of the present invention. The charging management method depicted in Fig. 1 is suitable for a hand-held electronic apparatus, for example, any hand-held portable electronic apparatus such as a mobile phone, a notebook, a tablet computer, or a smartphone. The charging management method includes the following steps: in step S110, a detection temperature on a charging port of the hand-held electronic apparatus is detected, wherein the charging port is coupled to a power adapter, and a charging action of a battery in the hand-held electronic apparatus is performed accordingly. Moreover, in step S120, the value of the detection temperature is judged, and an alert mode is started when the detection temperature exceeds a threshold. Herein, the threshold is a preset value, and may be set by the designer. The designer may use a temperature state when the hand-held electronic apparatus performs a charging action in a normal state as a setting basis for the threshold. Generally, when the detection temperature is near the threshold, it indicates that the charging action of the hand-held electronic apparatus may be abnormal.

In the alert mode, in step S130, variation of the detection temperature may be measured under a preset cycle. Specifically, the hand-held electronic apparatus may, in a fixed time interval, calculate a variation condition of the detection temperature, and accordingly observe a variation rate of the detection temperature. In step S140, an over-temperature flag is set according to the variation of the detection temperature. In the fixed time interval, when a rising value of the detection temperature is greater than a preset variation value, the hand-held electronic apparatus may set the over-temperature flag to be equal to a first logic level (e.g., logic level 1), and relatively, if the rising value of the detection temperature is not greater than the preset variation value, the hand-held electronic apparatus may maintain the over-temperature flag to be equal to a second logic level (e.g., logic level 0).

In step S150, the hand-held electronic apparatus may generate over-temperature information according to the over-temperature flag, and provide the over-temperature information to a power adapter to make the power adapter stop providing a charging voltage to the hand-held electronic apparatus. Herein, when the over-temperature flag is set as the first logic level, the hand-held electronic apparatus may generate over-temperature information according to the over-temperature flag, and transmit the over-temperature information to the power adapter through a communication interface. It should be noted that the over-temperature information is not limited in the format. In an embodiment of the present invention, the hand-held electronic apparatus may use the value of the over-temperature flag as over-temperature information and transmit it to the power adapter, or, in other embodiments of the present invention, the hand-held electronic apparatus may convert the value of the over-temperature flag to a data packet, and transmit the data packet to the power adapter.

When the power adapter receives the over-temperature information, the power adapter may stop supplying a charging voltage, and stop charging the hand-held electronic apparatus, to ensure security of the system.

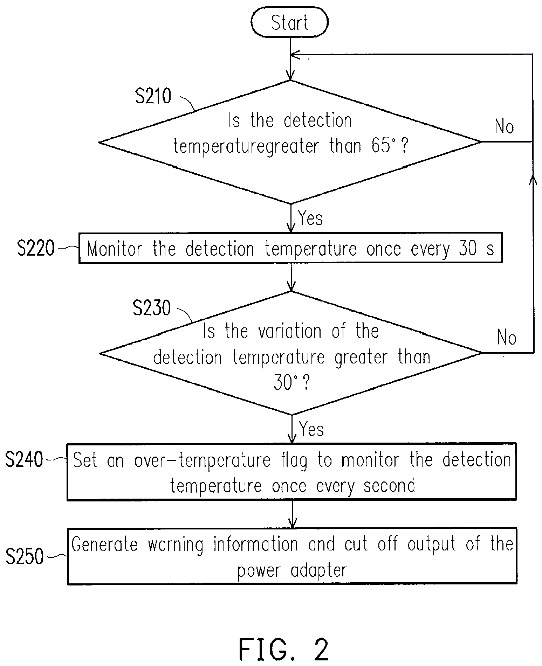

To describe the charging management method proposed in the present invention more clearly, please refer to the flow chart of implementation steps of the charging management method according to the embodiment of the present invention depicted in Fig. 2. In Fig. 2, temperature detection is performed for a charging port of the hand-held electronic apparatus, a detection temperature is obtained, and judgment of whether the detection temperature is greater than a threshold 65°C is performed in step S210. If the detection temperature is not greater than 65°C constantly, step S210 is repeated, and relatively, if the detection temperature is greater than 65°C constantly, an alert mode is entered, and step S220 is performed.

In step S220, a preset cycle is set to 30 s, and a variation state per 30 second of the detection temperature is obtained by monitoring the amplitude of the detection temperature once every 30 s. Next, in step S230, whether the rising amplitude of the detection temperature every 30 second exceeds 30°C is judged. If it is judged that the rising amplitude of the detection temperature every 30 second exceeds 30°C, step S240 is performed, and relatively, if it is judged that the rising amplitude of the detection temperature every 30 second does not exceed 30°C, step S210 is performed again to judge whether the detection temperature is greater than 65°C. It should be noted that, if it is found in the alert mode that the detection temperature decreases to 65°C below, the alert mode is closed.

In step S240, as the rising amplitude of the detection temperature every 30 second exceeds 30°C, indicating that the variation state of the temperature on the charging port of the hand-held electronic apparatus is abnormal, an over-temperature flag is set, and the detection temperature is intensely monitored once every second. In step S250, warning information is generated according to the over-temperature flag, and the over-temperature information is transmitted to the power adapter according to the over-temperature flag, to make the power adapter stop providing the charging voltage to the hand-held electronic apparatus.

In the above description, the warning information may be at least one of a display image, an alert sound, and vibration.

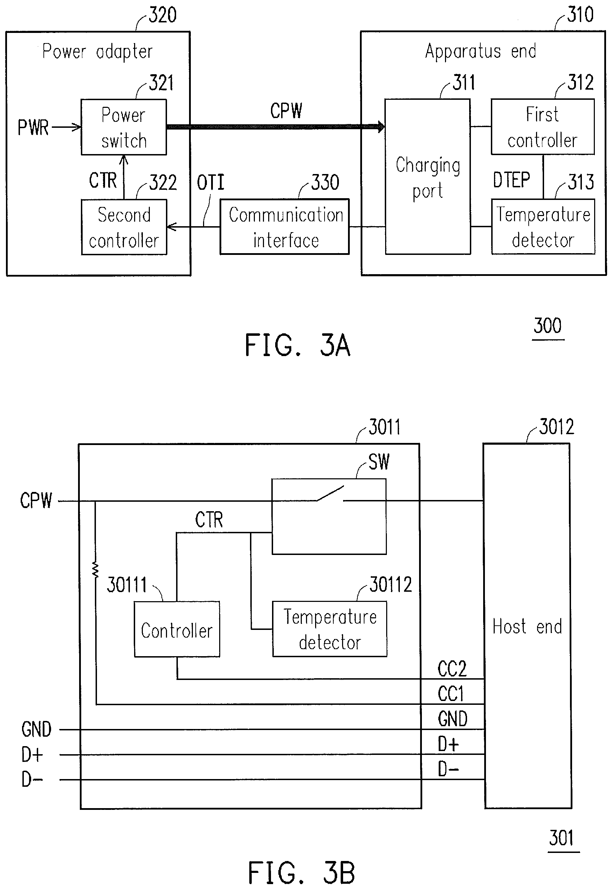

Referring to Fig. 3A, Fig. 3A is a schematic diagram of a charging system according to an embodiment of the present invention. The charging system 300 includes an apparatus end 310 and a power adapter 320. The apparatus end 310 has a charging port 311, a temperature detector 313, and a first controller 312. The temperature detector 313 may be configured on the charging port 311, and detect the temperature of the charging port 311 to generate and transmit the detection temperature DTEM to the first controller 312. The power adapter 320 includes a power switch 321 and a second controller 322. The second controller 322 transmits information with the apparatus end 310 through a communication interface 322. The power switch 321 receives a power source PWR and a control signal CTR, to be turned on or cut off according to the control signal CTR, and in the state of being turned on, the power switch 321 generates a charging voltage CPW according to the power source PWR and transmits the charging voltage CPW to the apparatus end 310 to charge the battery in the apparatus end 310. The control signal CTR is generated by the second controller 322, and the second controller 322 may generate the control signal CTR according to over-temperature information DTI transmitted by the apparatus end 310. When the over-temperature information DTI indicates that the temperature state on the charging port 311 is abnormal, the second controller 322 may generate the control signal CTR according to the over-temperature information DTI to switch off the power switch 321.

Herein, in the apparatus end 310, the first controller 312 may detect the temperature on the charging port 311 according to the temperature management process in Fig. 1, and generate the over-temperature information DTI accordingly. Related details are not repeated herein. To detect the variation state of the temperature on the charging port 311 more accurately, the temperature detector 313 may be disposed adjacently to the charging port 311.

On the other hand, the communication interface 330 in this embodiment may be a wired or wireless communication interface, which is not particularly limited in the transmission format.

Additionally, the apparatus end 310 and the power adapter 320 in this embodiment may be connected through a C-type universal serial bus (USB), and the charging voltage is transmitted through the C-type USB, to rapidly charge the apparatus end 310. The apparatus end 310 may be the hand-held electronic apparatus.

Next, referring to Fig. 3B, Fig. 3B is a schematic diagram of an implementation manner of an apparatus end according to an embodiment of the present invention. The apparatus end 301 includes a connector 3011 and a host end 3012. In some implementation manners, the connector 3011 may be a pure transmitting wire. In this implementation manner, the host end 3012 may be coupled to the power adapter through the connector 3011 to receive a charging voltage CPW. A controller 30111, a power switch SW, and a temperature detector 30112 are disposed in the connector 3011. By taking the connector in the form of a C-type USB as an example, the controller 30111 is coupled to the host end 3012 through a configuration channel (CC) pin CC2 (or CC1). The connector 3011 provides data pins D+, D- and a ground pin GND of the host end 3012 to be coupled to a connecting interface of the power adapter.

In Fig. 3B, the controller 30111, the power switch SW, and the temperature detector 30112 disposed in the connector 3011 may perform a charging control action of the apparatus end 301 by performing the implementation steps of the charging management method depicted in Fig. 2. When the temperature state is abnormal, the host end 3012 may transmit over-temperature information to the controller 30111 through a CC pin CC2. The controller 30111 generates a control signal CTR according to the over-temperature information to switch off the power switch SW, disconnects a channel through which the charging voltage CPW is provided to the host end 3012, and stops the charging action. Certainly, if the temperature state is not abnormal, the power switch SW may be turned on, and the charging voltage CPW is provided to the host end 3012 for normal charging.

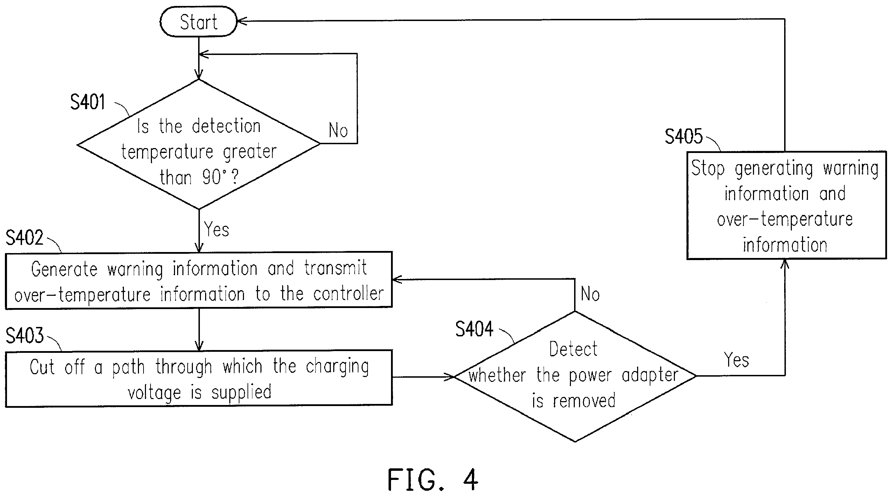

Referring to Fig. 4, Fig. 4 is a flow chart of implementation steps of a charging management method according to another embodiment of the present invention. In conjunction with the implementation manner depicted in Fig. 3B, in step S410, the host end 3012 may detect whether the detection temperature obtained by the temperature detector 30112 is greater than a threshold (e.g., 90°C), step S402 is performed when the detection temperature is greater than or equal to 90°C, warning information is generated and over-temperature information is transmitted to the controller 30111. On the other hand, if the detection temperature is less than 90°C, the detecting action in step S401 is continued. In step S403, the controller 30111 may generate a control signal CTR according to the over-temperature information to switch off the power switch SW, and stop providing the charging voltage CPW. Next, the host end 3012 may perform step S404 to detect whether the power adapter is removed. If the power adapter is not removed constantly, the host end 3012 may send warning information constantly. On the contrary, if it is detected that the power adapter has been removed constantly, the host end 3012 may stop generating the warning information and stop providing the over-temperature information to the controller 30111 (step S405).

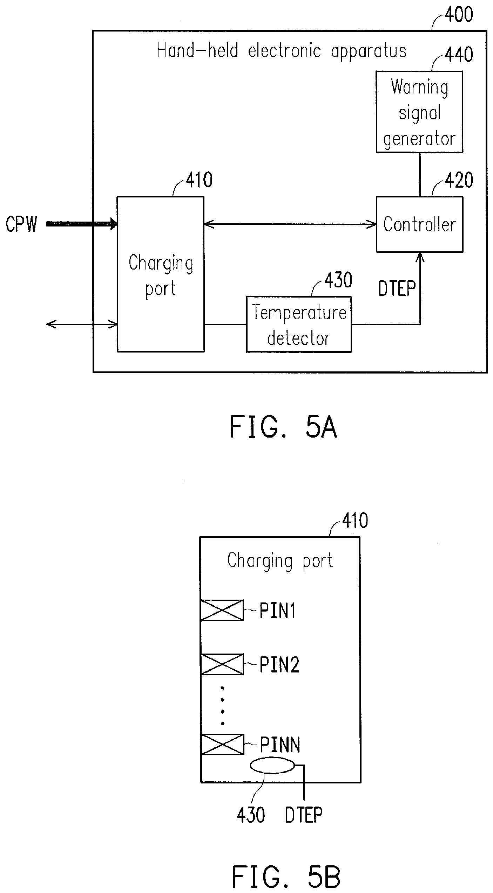

Referring to Fig. 5A and Fig. 5B, Fig. 5A and Fig. 5B are schematic diagrams of implementation manners of a hand-held electronic apparatus and a charging port thereof. In Fig. 5A, the hand-held electronic apparatus 400 includes a charging port 410, a controller 420, a temperature detector 430, and a warning signal generator 440. The temperature detector 430 is used for detecting the temperature on the charging port 410 and obtaining a detection temperature DTEM. The controller 420 receives the detection temperature DTEM and monitors a variation rate of the detection temperature DTEM through the step flow shown in the embodiment of Fig. 1 to generate over-temperature information, and closes the charging voltage CPW provided by the external power adapter is closed according to the over-temperature information.

It should be noted that the warning signal generator 440 is coupled to the controller 420, and sends warning information corresponding to generation of the over-temperature information. The warning signal generator 440 may be a display screen, and when the temperature state on the charging port 410 is abnormal, displays a warning signal through the screen or flashing light. Certainly, the warning signal generator 440 may also be a buzzer, a speaker or other sounding apparatuses, for making a warning sound to prompt a user that the temperature state on the charging port 410 is abnormal. Alternatively, the warning signal generator 440 may be an actuator, to generate warning information by making the hand-held electronic apparatus 400 vibrate. Certainly, the warning signal generator 440 may also include multiple of the manners of generating the warning information to ensure that the user can receive the warning information.

It should be noted that in Fig. 5B, when the charging port 410 is a C-type USB port, the charging port 410 has multiple pins PIN1-PINN. The temperature detector 430 may be disposed adjacently to a CC pin PINN, and monitor whether the CC pin PINN is short-circuited.

In this implementation manner, the temperature detector 430 may be a thermistor, or other types constructed by any component that may change physical quantity according to the temperature. The detection temperature DTEM may be obtained according to the physical quantity changed by the temperature detector 430.

In summary, the present invention detects the detection temperature of the charging port in the hand-held electronic apparatus, and after the detection temperature is greater than a default threshold, stops supplying the charging voltage to the power adapter according to the variation rate of the detection temperature. In this way, the high-temperature state generated due to degradation of the charging port can be detected, and security of the hand-held electronic apparatus in use is improved.

Although the present invention has been described as above with embodiments, the embodiments are not used to limit the present invention. Any person of ordinary skill in the art may make some changes and modifications without departing from the spirit and scope of the present invention, and thus the protection scope of the present invention should be subject to that defined by the appended claims.

## Claims

1. A charging management method, applied to a hand-held electronic apparatus, comprising:
detecting a detection temperature on a charging port of the hand-held electronic apparatus, wherein the charging port is coupled to a power adapter;
starting an alert mode when the detection temperature exceeds a threshold;
measuring variation of the detection temperature according to a preset cycle in the alert mode;
setting an over-temperature flag according to the variation of the detection temperature in the alert mode; and
making the power adapter stop providing a charging voltage according to the over-temperature flag.

2. The charging management method according to claim 1, wherein the step of making the power adapter stop providing a charging voltage according to the over-temperature flag comprises:
generating over-temperature information when the over-temperature flag is set; and
transmitting the over-temperature information to the power adapter through a communication interface,
wherein, the power adapter stops providing the charging voltage to the hand-held electronic apparatus according to the over-temperature information.

3. The charging management method according to claim 1, wherein the step of making the power adapter stop providing the charging voltage according to the over-temperature flag comprises:
disconnecting a transmitting channel providing the charging voltage to the hand-held electronic apparatus according to the over-temperature flag.

4. The charging management method according to claim 1, further comprising:
turning off the alert mode if the detection temperature is lower than the threshold in the alert mode.

5. A charging system, comprising:
an apparatus end having a charging port, a temperature detector, and a first controller, the temperature detector being disposed on the charging port and transmitting a detection temperature to the first controller; and
a power adapter coupled to the apparatus end, providing a charging voltage to the charging port,
wherein the first controller starts an alert mode when the detection temperature exceeds a threshold, measures variation of the detection temperature according to a preset cycle in the alert mode, and sets an over-temperature flag according to the variation of the detection temperature, and the first controller transmits over-temperature information to the power adapter according to the over-temperature flag, and makes the power adapter stop providing the charging voltage to the charging port.

6. The charging system according to claim 5, wherein the power adapter comprises:
a power switch receiving a power source and a control signal, to be turned on or cut off according to the control signal, wherein, when the power switch is turned on, the charging voltage is generated according to the power; and
a second controller coupled to the power switch, receiving the over-temperature information through a communication interface, and generating the control signal according to the over-temperature information.

7. The charging system according to claim 5, wherein, if the first controller judges that the detection temperature is lower than the threshold in the alert mode, the alert mode is closed.

8. The charging system according to claim 5, wherein the apparatus further comprises:
a host end; and
a connector coupled between the host end and the power adapter, for transmitting the charging voltage to the host end.

9. The charging system according to claim 8, wherein the connector is a transmitting wire.

10. A connector, receiving a charging voltage provided by a power adapter, and connected to a host end through a charging port, comprising:
a temperature detector detecting a detection temperature;
a controller coupled to the temperature detector, receiving the detection temperature; and
a power switch coupled to the first controller, the power adapter, and the charging port,
wherein the controller starts an alert mode when the detection temperature exceeds a threshold, and measures variation of the detection temperature in the alert mode according to a preset cycle, and sets an over-temperature flag according to the variation of the detection temperature, and the controller transmits over-temperature information to the power switch according to the over-temperature flag, and makes the power switch cut off to stop providing the charging voltage to the charging port.

11. A hand-held electronic apparatus, connected with a power adapter for charging, comprising:
a charging port;
a temperature detector disposed adjacently to the charging port, detecting a detection temperature on the charging port; and
a controller coupled to the charging port and the temperature detector, receiving the detection temperature, starting an alert mode when the detection temperature exceeds a threshold, measuring variation of the detection temperature in the alert mode according to a preset cycle, and setting an over-temperature flag according to the variation of the detection temperature, wherein the controller transmits over-temperature information to the power adapter according to the over-temperature flag, and makes the power adapter stop providing a charging voltage to the charging port.

12. The hand-held electronic apparatus according to claim 11, wherein the charging port has multiple pins, and the temperature detector is disposed adjacently to one of the pins.

13. The hand-held electronic apparatus according to claim 11, wherein the charging port is a C-type universal serial bus port, and the temperature detector is disposed adjacently to a configuration channel pin.

14. The hand-held electronic apparatus according to claim 11, wherein, if the controller judges that the detection temperature is lower than the threshold in the alert mode, the alert mode is closed.

15. The hand-held electronic apparatus according to claim 11, wherein, when the controller judges that the variation of the detection temperature is greater than a default variation value in the alert mode, the over-temperature flag is set as a first logic level.

16. The hand-held electronic apparatus according to claim 11, further comprising:
a warning signal generator coupled to the controller, sending warning information after the power adapter stops providing the charging voltage.
